# EUROPEAN PATENT APPLICATION

(11) **EP 3 159 080 A1**
(43) Date of publication of application: **26.04.2017**
(21) Application number: 15190416.6
(22) Date of filing: 19.10.2015
(51) Int. Cl.: B22F 3/105, B22F 7/08, B29C 67/00

(54) **METHOD OF ADJUSTING AN ADDITIVE MANUFACTURING APPARATUS, METHOD OF MANUFACTURING AND SETUP**

(71) Applicant: Siemens Aktiengesellschaft, 80333 München (DE)
(72) Inventor: Rule, David, 10115 Berlin (DE)

(57) **Abstract**

A method of adjusting a powder bed manufacturing apparatus (10) is described. The method comprises disposing a substrate structure (2) on a base (1), wherein the base (1) comprises at least one reference feature (3), recording image data of the at least one reference feature (3) and the substrate structure (2), determining a position of the substrate structure (2) on the base (1) by a recognition procedure and by means of the image data, and aligning of a laser beam of the powder bed manufacturing apparatus (10) to the position of the substrate structure (2). Further, a setup (100) is described comprising the base (1), the powder bed manufacturing apparatus (10) and the recognition unit (20) which is configured to record the image data and to determine the position of the substrate structure (2), and wherein the setup (100) is configured to align the laser beam to the position of the substrate structure (2).

## Description

The present invention relates to a method of adjusting a manufacturing apparatus such as a powder bed manufacturing apparatus, e.g. an apparatus for selective laser melting. Moreover, the present invention relates to a method of manufacturing, a manufactured component and a corresponding setup.

In the manufacture, service and repair of components, such as vanes of gas turbines, additive manufacturing processes play an important role. Particularly, powder bed manufacturing processes, such as SLM (selective laser melting) are important, e.g. in repair applications of turbine vanes. In contrast to a laser cladding technique, for example, the SLM-technique stands out for the structural and surface properties of the ready-manufactured components. In the mentioned field, there is a demand for the manufacture of material on preexisting or prefabricated components in an accurate way.

A powder bed manufacturing process is known from EP 2 415 552 A1, for example.

It is an object of the present disclosure to provide means to accurately manufacture structures e.g. for gas turbine applications. Particularly, means for an improved method of manufacturing of the mentioned components are provided.

This object is achieved by the subject-matter of the independent claims. Advantages embodiments and refinements are subject-matter of the dependent claims.

An aspect of the present invention relates to a method of adjusting a manufacturing apparatus, preferably a powder bed manufacturing apparatus. The method comprises disposing a substrate structure on a base or build plate, wherein the base comprises at least one reference feature. Expediently, the method further comprises - prior to the disposing - providing of the base and the substrate structure. The substrate structure is preferably an already existing component or subcomponent, e.g. a component which is to be repaired or overhauled by means of additive manufacturing. The substrate structure may be or be part of a turbine vane, such as a blade or guide vane of a gas turbine.

Preferably, the substrate structure is fixed to the base or being fixed thereto within the described method or disposing step. Preferably, the base further comprises a plurality of reference features.

The method further comprises recording of an image or image data of the at least one reference feature and the substrate structure. Preferably, said image data relate to a photograph, such as a high-resolution photograph e.g. taken in plan view of the substrate structure and the base. The image may be or comprise a photograph or the data thereof.

The method further comprises determining of a position of the substrate structure on the base by a recognition procedure and by means of the image data. Said determining may be an approximative process.

Preferably, the position relates to a lateral position of the substrate structure on the base, wherein the substrate structure is arranged on or fixed to the base. Said position may as well relate to the position of a manufacturing surface of the substrate structure which is to be coated with material during a manufacture e.g. carried out in or by the powder bed manufacturing apparatus.

Said position may relate to a position of the substrate structure relative to the base and/or relative to the at least one reference feature.

The recognition procedure is, preferably, an optical recognition procedure, such as an optical pattern recognition procedure.

The method further comprises aligning of the manufacturing apparatus, particularly a laser beam of the powder bed manufacturing apparatus, to the position of the substrate structure.

A further aspect of the present invention relates to a method of manufacturing, e.g. additively manufacturing, of the component. The method comprises the method of adjusting as described. The method further comprises additively manufacturing of a material for the component onto the substrate structure. Said additive manufacturing is, preferably, a powder bed manufacturing process, such as SLM, as described above. Particularly, said manufacturing is an adaptive manufacturing onto an already existing structure, the substrate structure. Preferably, the mentioned ready-manufactured component comprises the substrate structure and the material - or a corresponding material in an alloyed or tempered state - which has been deposited or manufactured onto the substrate structure. Thus, the substrate structure and the material are preferably metallurgically bonded.

In an embodiment at least one of the method steps of the recording, determining and aligning of the method of adjusting are carried out repeatedly or iteratively during the manufacturing of the component. Thereby, it may advantageously be achieved that the the position of the substrate structure can be corrected and/or determined even more accurately e.g. as compared to a manufacturing method which is only adjusted once or in which the position of the substrate structure is only determined prior to the actual manufacture.

In an embodiment the powder bed manufacturing apparatus is an apparatus for selective laser melting and the material is deposited or manufactured onto the substrate structure by selective laser melting. Alternatively, the manufacturing apparatus may be an apparatus for selective laser sintering and the material is manufactured onto the substrate structure by selective laser sintering.

A further aspect of the present disclosure relates to a component which is or can be manufactured by the method of manufacturing as described. Said component may comprise the substrate structure as well as further material deposited or manufactured onto the substrate structure.

As an advantage of the described methods, the position of the substrate structure and/or the manufacturing surface of the substrate structure may accurately be identified and/or determined such that the laser beam of the powder bed manufacturing apparatus can be aligned to said position. Thereby, the manufacture of material onto the substrate structure and/or the manufacture related to repair applications may be achieved in an accurate way.

In contrast, in conventional apparatuses, e.g. for SLM, the alignment of the laser equipment to the surface to which the deposition is aimed at, has to be done either manually of by means of specifically calibrated fixtures.

In an embodiment the image data are processed within the recognition procedure. This is an expedient or necessary embodiment in order to be able to actually determine the position of the substrate structure.

In an embodiment the image data are - e. g. within the processing step - compared and/of fitted to sample data within the recognition procedure, e.g. in order to determine the position of the substrate structure. Said sample data are preferably data, such as image data of the substrate structure and the at least one reference feature or both. For example, the sample data comprise information about the at least one reference feature or the position or location thereof. Additionally or alternatively the image data may comprise information about the geometry of the substrate structure or the manufacturing surface. Said image data may further be accessible via a database, for example.

In an embodiment a contour of the substrate structure is determined, e.g. by means of the image data within the recognition procedure. Additionally or alternatively said contour or boundary may be determined by means of the mentioned sample data.

Preferably, said contour relates to an outermost point of the substrate structure, e.g. with respect to a horizontal extension. Said boundary may as well relate to a part or segment of an edge or point of a boundary of the substrate structure. The information of the position of the contour is preferably used to determine the position of the substrate structure.

In an embodiment an orientation angle of the substrate structure is determined e.g. by means of the image data within the recognition procedure. Additionally or alternatively said orientation angle may be determined by means of the mentioned sample data.

The orientation angle may be an angle between a reference direction such as the vertical direction, and a longitudinal axis of the substrate structure, for example. The information of the orientation angle is, preferably, also used to determine the exact position of the substrate structure.

The term "position" as used herein, preferably, comprises information about said contour as well as of the orientation or said orientation angle.

In an embodiment the position of the substrate structure on the base is or defines the position of the manufacturing surface of the substrate structure. As mentioned, the manufacturing surface is preferably the actual surface which is to be coated with material for the respective manufacture.

In this way, the manufacturing surface preferably defines or coincides with an outline of the substrate structure or a cross section thereof. Thus, when it is referred to the substrate structure in here, it may as well be referred to a cross section thereof and/or the manufacturing surface.

In an embodiment a geometry of the manufacturing surface is predefined or predetermined. Said geometry may relate to a shape or outline of the substrate structure, the component or the manufacturing surface. Further, the geometry of the manufacturing surface may be present or on hand for the recognition procedure as sample data, e.g. from laser scanning experiments.

In an embodiment the base comprises a plurality of reference features, and the image data comprise information about the plurality of reference features, preferably about the position of the reference features on the base. The presence of a plurality of reference features may advantageously help to enhance accuracy of the recognition procedure in the determining of the position the of substrate structure.

In an embodiment, the substrate structure is or is a part of a pre-existing component, such as a vane or blade for a turbine. In this regard, the manufacturing surface may constitute the surface of said vane or blade which is to be manufactured and/or repaired within the manufacturing of the component.

A further aspect of the present disclosure relates to a setup comprising the base, further comprising the at least one reference feature. The setup further comprises the manufacturing apparatus, preferably the powder bed manufacturing apparatus. Preferably, the manufacturing apparatus, in turn, comprises the base such that the base is also comprised by said setup.

The setup further comprises a recognition unit, which is expediently configured and arranged to record image data of the at least one reference feature and the substrate structure.

Further, the recognition unit is expediently configured to determine, such as approximately determine, the position of the substrate structure - being disposed on the base - by the recognition procedure and by means of the image data. Furthermore, the setup is configured to align the laser beam of the manufacturing apparatus to the position of the substrate structure.

Expediently, the component as described herein may comprise properties which are specific and/or characteristic for the described method of manufacturing such that the component may be distinguished from components which have been manufactured by other techniques by means of structural and/or elemental analysis, for example. Further, surface properties of the component as described herein may be characteristic for the according method of manufacture and may be probed by an appropriate surface analysis technique known to a skilled person.

Features or advantages which are described herein above and below in conjunction with the method of adjusting and the method of manufacturing may as well relate to the component and/or the setup and vice versa.

The present invention is further described hereinafter with reference to illustrated embodiments shown in the accompanying drawings.
- Figure 1: shows a simplified indication of at least parts of a method of adjusting.
- Figure 2: shows a simplified indication of sample data.
- Figure 3: shows a simplified indication of at least parts of the method of adjusting.
- Figure 4: shows a schematic of a side view of a setup.

Various embodiments are described with reference to the drawings, wherein like reference numerals are used to refer to like elements throughout.

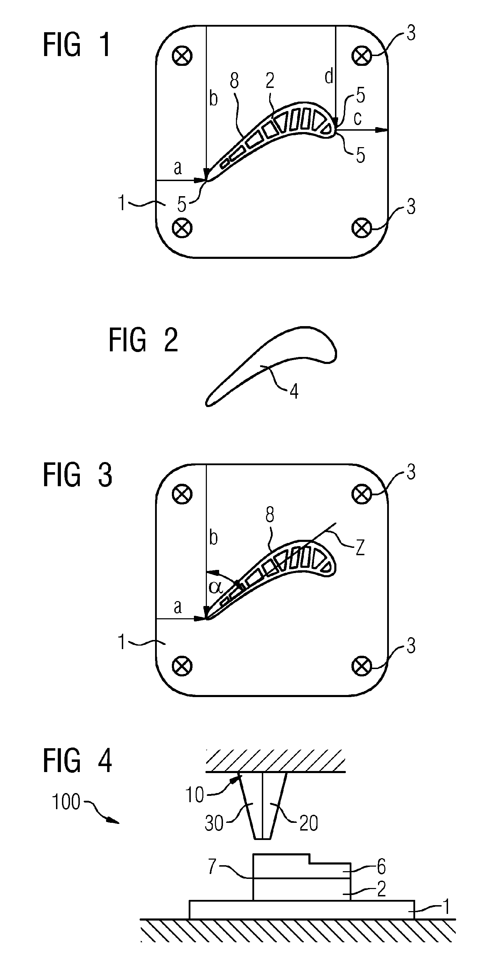

Figure 1 shows an exemplary embodiment of image data. Figure 1 may also comprise information in addition to the mentioned image data. Figure 1 particularly shows a top view image of a base 1. The base 1 comprises - in each of its corners - a reference feature 3, thus four reference features 3 in total (cf. crosses and circles 3 indicating exemplarily the reference features). Said reference features 3 serve for an optical reference for a method of adjusting a powder bed manufacturing apparatus, such as an apparatus for selective laser melting (SLM) as indicated with reference numeral 10 in Figure 3. The base 1 may be a conventional base or build plate of or for the additive manufacturing apparatus.

Generally, an SLM-technique comprises the manufacturing of a part or component layer-by-layer after the feeding of a layer of powder which is melted by a laser beam. The layer thickness is created by a scraper that moves over the powder bed and removes all excess powder. The layer thickness is typically 20 µm or 40 µm. The laser beam then scans over the corresponding surface and melts and subsequently solidifies the powder on selective areas according to the desired geometry of the component. Said geometry may be predetermined or present from a CAD-file. After the manufacturing or scanning of a first layer, the manufacturing platform or base of the manufacturing apparatus is expediently lowered by a distance corresponding to the thickness of the mentioned layer.

A substrate structure 2 is disposed on the base 1. The substrate structure 2 is, preferably, an already existing or pre-fabricated structure or subcomponent which may be coated or additively manufactured by a method of manufacturing (cf. Figure 3 below). The substrate structure 2 may be or be a part of a blade or vane, such as a guide vane of a gas turbine. Preferably, the substrate structure 2 is a pre-existing, pre-manufactured or incomplete part for a gas turbine and/or a part which needs to be repaired or overhauled by means of additive manufacturing.

Preferably, the ready-manufactured or repaired part or substrate structure constitutes the component as described herein.

The substrate structure 2 comprises a contour 8. It is further shown in Figure 1 that the contour 8 of the substrate structure 2 has the shape of an air foil of a vane, for example. The depicted contour 8 preferably indicates or defines a manufacturing surface or plane (a separate numeral is thus not explicitly indicated). For example, the manufacturing surface extends along the contour 8 and also along certain regions or bridges in the inside of the contour 8 or substrate structure 2, as indicated.

The manufacturing surface of the substrate structure 2 may - due to the extension of the substrate structure 2 along a direction perpendicular to the paper plane - not coincide with a surface of the base 1.

The image of the substrate structure may as well constitute a cross-section of the substrate structure 2.

The image or image data of Figure 1 is, preferably, present in the form of a photograph, such as a high-resolution photograph of the substrate structure 2 disposed on the base 1. The image data may as well relate or comprise data recorded from a laser scanner.

In the following said method of adjusting as well as a corresponding method of manufacturing is described:
The method of adjusting comprises, after the providing of the base 1 and the substrate structure 2, disposing of the substrate structure 2 on the base 1. Therefore, the substrate structure 2 may also be fixed to the base 1. The method further comprises recording of the image data (cf. Figure 1) as described. Afterwards, the method comprises determining of a position of the substrate structure 2 on the base 1 by a recognition procedure and by means of the image data and subsequently the aligning of the laser beam of the powder bed manufacturing apparatus (cf. Figure 3) to the position of the substrate structure 2. The laser beam may e.g. be aligned by means of electromagnetic optics or lenses or other expedient means known by a skilled person.

The above-mentioned aligning may relate or comprise the transmittal of information of the position of the substrate structure 2 to the powder bed manufacturing apparatus or a unit thereof.

Said position is preferably a lateral position (i.e. in the paper plane of Figure 1) of the substrate structure 2 on the surface of the base 1.

The recognition procedure is, preferably, an optical pattern recognition procedure. The described determining of the position may, thus, be an approximative method or an approximative determining. Said determining and/or aligning may additionally or alternatively be carried out iteratively or repeatedly in order to obtain more reliable information about the position of the substrate structure 2 even during the manufacture of the component (cf. numeral 7 in Figure 4). Expediently, the recording of the image data may then as well be carried out repeatedly. A repeated determining of the position may particularly be expedient after a certain number of layers have already been manufactured for the component such that - due to the varied morphology of the component during the manufacture - "readjustment" or correction of the position of the substrate structure is necessary.

For the recognition or determining of the position of the substrate structure, an image or photograph is recorded as image data, preferably a highly resolved photograph as indicated in Figure 1 (cf. above). Said image or photograph, preferably includes or encompasses the position of the substrate structure 2 as well as that one of at least one, preferably all of the reference features 3. Based on this information, the mentioned position is determined.

Within the recognition procedure, which may be performed in an according recognition unit (cf. numeral 20 in Figure 3), the image data may be processed, such as compared and/or fitted to sample data. The recognition procedure may comprise a set-actual comparison.

A sample data image 4 is exemplarily indicated in Figure 2. The sample data or sample data image 4 resembles the manufacturing surface and/or an outline of the substrate structure 2 as shown in Figure 1. This information of the sample data image 4 enables or eases the accurate determining of the position of the substrate structure 2. Alternatively, the position of the substrate structure 2 may be determined without the use of any sample data.

Particularly within or by the recognition procedure and by means of the image data as well as the sample data 4, the contour 8 or border of the substrate structure 2 or manufacturing surface is determined. In Figure 1 two contour points 5 are indicated. Each of the contour points 5 relate to an outermost point or boundary of the substrate structure, e.g. with respect to its horizontal extension. The arrows or distances a, b, c and d indicate the location of the mentioned contour points 5. The distances a and b define the left boundary and the distances c and d define the right boundary in the image. Thereby, it is indicated in Figure 1 that the position of the substrate structure 2 has been determined, wherein, within the recognition procedure, the image data of Figure 1 has been processed or compared to the sample data 4 of Figure 2, for example.

In Figure 3, an angle α is indicated. Said angle may be an orientation angle. The orientation angle α is an angle between a reference direction, such as the vertical direction in Figure 3, and a longitudinal axis of the substrate structure or its cross section as indicated by Z in Figure 3. Said orientation angle α may e.g. be expedient or necessary for the determining of the position of the substrate structure 2. For example, when only one of the contour points 5 shown in Figure 1 is or could have been determined within the recognition procedure, the orientation angle α is a means to fully determine the overall position of the substrate structure 2.

The orientation angle α is or can be determined within or by the recognition procedure in a way comparable to the case of the determining of the contour points 5. To this effect, Figure 3 may - apart from the indication of the orientation angle α - be analogue to Figure 2. Figure 3 may as well indicate an actual top view image of the base 1 and the substrate structure 2. It is shown in Figure 3 that the geometry at which the deposition or additive manufacturing is aimed at is already determined as shall be indicated by the outline of the substrate structure 2 in the centre of the base 1. The mentioned outline and position of the substrate structure 2 coincide well with position and outline of the substrate structure of the image data shown in Figure 1.

Particularly, for the determining of the position of the substrate structure 2 by the recognition procedure and by means of the image data and/or the sample data, conventional methods known to a skilled person may be applied. Particularly, by means of a pixel analysis of the image data, the image data may be compared and/or fitted to the sample data. A pixel position or distribution, e.g. of the photograph of the image data, may be compared to the sample data. The image data may as well only be extracted from the image or photograph and initially corrected or processed, wherein afterwards it may be compared to the sample data. Particularly, a sub-image, such as a sub-image of the at least one reference feature or an image segment thereof may be compared to a sample feature of the sample data. In the same way, e.g. a sub-image or partial image of the substrate structure or the manufacturing surface may be compared to the sample data of the reference structure. Any part or segment of the image data may e.g. be fitted to a corresponding part or segment of the sample data, e.g. by means of the "least square method".

Said sample data of the substrate structure 2 may be predefined and present from laser scanning experiments. In this way a component 7 (cf. Figure 3) which is to be additively manufactured has preferably been scanned by a laser scanner prior to the application of the described methods in order to record its shape, particularly the geometry of the manufacturing surface.

For the aligning within the described method of adjusting, a laser beam (not explicitly indicated) is preferably aligned or coordinated to or with the position of the substrate structure in X- or Y-direction, i.e. a scanning direction over the base 1 and/or a direction within the paper plane of Figure 3, for example. Preferably, the actual manufacturing surface may - for every geometry of the component 7 or substrate structure 2 and according to the above-described SLM-procedure be adjusted to a defined level or the actual level such that the described determining and/or aligning step can be carried out properly or automatically (see above).

Figure 4 indicates a schematic of a powder bed manufacturing method such as selective laser melting, and a corresponding setup 100 in a side view. The setup 100 comprises a powder bed manufacturing apparatus 10 such as an SLM apparatus. Said apparatus expediently comprises a laser or laser equipment 30. The laser equipment 30 may - apart from the indication of Figure 4 - comprise specific optics and/or lenses for the beam control.

The powder bed manufacturing apparatus 10 further comprises a recognition unit 20. In Figure 3, the described base 1 is shown. On top of the base 1, the substrate structure 2 is disposed. On top of the substrate structure 2 or as the case may be the corresponding manufacturing surface, a material 6 for the component 7 is deposited or additively manufactured.

The recognition unit 20 is, preferably, configured to determine the position of the substrate structure 2 disposed on the base 1 by the recognition procedure which is expediently carried out by the recognition unit 20. The position is further determined by means of the sample data as described. The setup 100 is further configured to align the laser beam of the powder bed manufacturing apparatus to the position of the substrate structure 2. Further components of the setup 100 may also be comprised by the manufacturing apparatus 10, such as the base 1, for example.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. For example, the described powder bed manufacturing method, apparatus or setup may alternatively be related to selective laser sintering or electron beam melting. It is therefore contemplated that such modifications can be made without departing from the embodiments of the present invention as defined.

## Claims

1. Method of adjusting a powder bed manufacturing apparatus (10) comprising the steps of:
- disposing a substrate structure (2) on a base (1), wherein the base (1) comprises at least one reference feature (3),
- recording image data of the at least one reference feature (3) and the substrate structure (2),
- determining a position of the substrate structure (2) on the base (1) by a recognition procedure and by means of the image data, and
- aligning of a laser beam of the powder bed manufacturing apparatus (10) to the position of the substrate structure (2).

2. Method according to claim 1, wherein, within the recognition procedure, the image data are processed and wherein the image data are compared to sample data (4).

3. Method according to claim 1 or 2, wherein, within the recognition procedure, a contour (8) of the substrate structure (2) is determined.

4. Method according to one of the previous claims, wherein, within the recognition procedure, an orientation angle (α) of the substrate structure (2) is determined.

5. Method according to one of the previous claims, wherein the position of the substrate structure (2) on the base (1) defines the position of a manufacturing surface of the substrate structure (2).

6. Method according to claim 5, wherein a geometry of the manufacturing surface is predefined.

7. Method according to one of the previous claims, wherein the base (1) comprises a plurality of reference features (3), and wherein the image data comprise information about the plurality of reference features (3).

8. Method according to one of the previous claims, wherein the substrate structure (2) is or is a part of a pre-existing component, such as a vane or blade for a turbine.

9. Method of manufacturing a component (7) comprising the method of adjusting according to at least one of the previous claims, further comprising additively manufacturing of a material (6) for the component onto the substrate structure (2).

10. Method according to claim 9, wherein at least one of the method steps of the recording, determining and aligning are carried out repeatedly or iteratively during the manufacturing of the component (7).

11. Method according to claim 9 or 10, wherein the powder bed manufacturing apparatus (10) is an apparatus for selective laser melting and the material (6) is manufactured onto the substrate structure (2) by selective laser melting.

12. Component (7) manufactured by the method according to claim 9 or 10, comprising the substrate structure (2) and the material (6) manufactured on the substrate structure (2).

13. Setup (100) comprising:
- a base (1) further comprising at least one reference feature (3),
- a powder bed manufacturing apparatus (10) and
- a recognition unit (20) being configured to record image data of the at least one reference feature (3) and a substrate structure (2) being disposed on the base (1) and to determine a position of the substrate structure (2) by a recognition procedure and by means of the image data, and wherein the setup (100) is configured to align a laser beam of the powder bed manufacturing apparatus (10) to the position of the substrate structure (2).
